# EUROPÄISCHE PATENTANMELDUNG

(11) **EP 2 332 814 A2**
(43) Veröffentlichungstag der Anmeldung: **15.06.2011**
(21) Anmeldenummer: 10013844.5
(22) Anmeldetag: 21.10.2010
(51) Int. Cl.: B62K 15/00, B62K 19/06

(54) **Zusammenlegbares bzw. zusammenklappbares Fahrrad**

(30) Priorität: 23.10.2009 DE 102009050445
(71) Anmelder: Freigeber, Jürgen, 42799 Leichlingen (DE)
(72) Erfinder: Freigeber, Jürgen, 42799 Leichlingen (DE)
(74) Vertreter: Sroka, Peter-Christian

(57) **Zusammenfassung**

Ein zusammenlegbares/zusammenklappbares Fahrrad, dessen Rahmen Rohre enthält, die insbesondere schwenkbar miteinander verbunden und/oder voneinander lösbar und wieder miteinander verbindbar sind, ist **dadurch gekennzeichnet, dass** mindestens ein Rohr (2; 3; 4) mit mindestens einer parallel zur Rahmenebene und in Rohrlängsrichtung verlaufenden Schiene (7; 8; 9) zur Befestigung von Fahrrad-Zubehörteilen versehen ist, wobei jedes Zubehörteil eine mit der Schiene (2; 3; 4) zusammenwirkende Halterung hat, und dass jede Schiene zum Ein- oder Aufstecken der Halterung mindestens eine senkrecht zur Schienentängsnchtung liegende Öffnung hat.

## Beschreibung

Die Erfindung betrifft ein zusammenlegbares bzw. zusammenklappbares Fahrrad, dessen Rahmen Rohre enthält, die insbesondere schwenkbar miteinander verbunden und/oder voneinander lösbar und wieder miteinander verbindbar sind.

Die Erfindung betrifft insbesondere Fahrräder gemäß DE 110 963, DE 20 2008 004 923 U1 bzw. US 4,718,688. Bei diesen Fahrrädern ist der Sattel im mittleren oder oberen Bereich eines schräg nach oben gerichteten Rahmenrohrs angebracht, wobei der Rahmen in der Grundversion im wesentlichen eine dreieckige Form hat und damit in der Regel auch aus drei Rahmenrohren zusammengesetzt ist.

Der Erfindung liegt die Aufgabe zugrunde, Maßnahmen vorzusehen, die es ermöglichen, das Fahrrad zu einem kompakten und wenig Raum beanspruchenden Paket zusammen zu legen, wobei es weiterhin auch darum geht, Zubehörteile schnell und zuverlässig von den Rahmenrohren zu trennen und ggf. auch in möglichst unterschiedlichen Stellungen anbringen zu können.

Zur Lösung dieser Aufgabe ist erfindungsgemäß vorgesehen, .dass mindestens ein Rohr mit mindestens einer parallel zur Rahmenebene und in Rohrlängsrichtung verlaufenden Schiene zur Befestigung von Fahrrad-Zubehörteilen versehen ist.

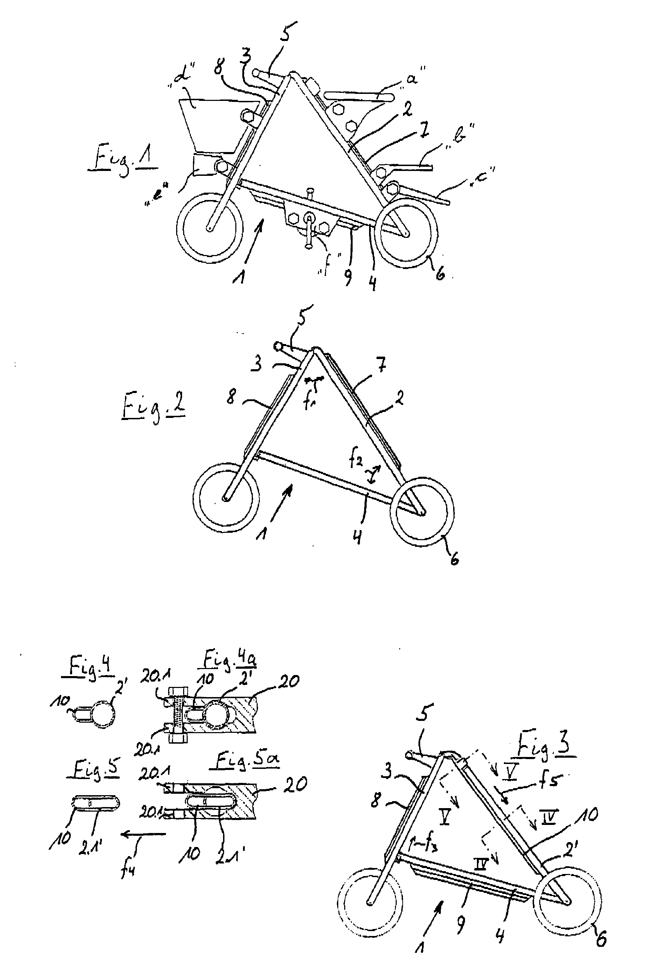

Unter den Begriff "Zubehörteile" fallen, so wie es in Figur 1 vereinfacht dargestellt ist, Fahrradsättel "a", Gepäckträger "b", Schutzblechelemente "c", Körbe "d" und Lampenelemente "c" sowie im Extremfall auch Pedalelemente "f'.

Jedes Zubehörteil hat vorzugsweise eine mit der Schiene zusammenwirkende Halterung, und die Schiene ist zum Ein- oder Aufstecken der Halterung mit mindestens einer senkrecht zur Schienenlängsrichtung ausgerichteten Öffnung versehen.

Bei einer derartigen Ausgestaltung des Fahrrades besteht die Möglichkeit, jedes Zubehörteil mittels der Halterung im Bereich dieser Öffnung entweder auf die Schiene aufzuschieben oder wieder davon zu trennen. Die Zubehörteile werden nach dem Aufschieben auf die Schiene der Schiene vorzugsweise unter Verwendung üblicher Klemm- oder Knebelmechanismen arretiert bzw. positioniert.

Die Erfindung wird im Folgenden anhand der Zeichnung näher beschrieben:
Figur 1 zeigt in schematischer Darstellung eine Seitenansicht eines mit diversen Zubehörteile bestückten Fahrrades;
Figur 2 zeigt in schematisierter Darstellung eine Seitenansicht eines Fahrrades mit an den Außenseiten von zwei Rahmenrohren angebrachten Schienen;
Figur 3 zeigt in schematisierter Darstellung eine Seitenansicht eines Fahrrades mit an den Außenseiten von zwei Rahmenrohren angeordneten Schienen und einer an der Innenseite eines Rohres angeordneten Schiene;
Figur 4 zeigt eine Schnittansicht gemäß den Pfeilen IV-IV in Figur 3;
Figur 4a zeigt eine Schnittdarstellung des Rohres gemäß Figur 4 mit auf das Rohr aufgeschobenem und daran festgeklemmtem Halterungsabschnitt;
Figur 5 zeigt eine Schnittansicht entsprechend den Pfeilen V-V in Figur 3;
Figur 5a zeigt die auf den in Figur 5 dargestellten Rohrabschnitt aufgeschobenen Halterungsabschnitt;
die Figuren 6 bis 10 zeigen Querschnitte verschiedener Rohr- und Schieinenprofile;
die Figuren 11 bis 13 zeigen in schematisierter Darstellung drei mit Retentionen versehene Schienen.

Figur 1 mit den an den Rahmen des Fahrrades befestigte Zubehörteilen "a" bis "f" lässt erahnen, dass nach dem Zusammenfalten des Fahrrades 1 diese Zubehörteile, und zwar insbesondere der Sattel "a" den für das zusammengeklappte Fahrrad benötigten Raumbedarf beträchtlich vergrößern, so dass ein Einpacken des zu einem Paket zusammengeklappten Fahrrades in Personenkraftwagen häufig nicht möglich ist.

Erfindungsgemäß kann dieser Nachteil beseitigt werden, wenn mindestens ein Rohr, insbesondere das den Sattel "a" tragende Rohr 2 mit einer parallel zur Rahmenebene und in Rohrlängsrichtung verlaufenden Schiene zur Befestigung solcher Fahrrad-Zubehörteile versehen ist.

Das in den Figuren 1 bis 3 dargestellte Fahrrad 1 hat einen im wesentlichen aus drei Rohren 2, 3 und 4 bestehenden Rahmen. Die Rohre 2 und 3 sind im Bereich ihrer oberen Enden einerseits in Richtung des Pfeiles f1 verschwankbar miteinander verbunden und andererseits so aneinander angelenkt, dass das Rohr 3 als Lenkerrohr mittels des Lenkers 5 relativ zu den Rohren 2 und 4 gedreht werden kann. Die Rohre 2 und 4 sind im Bereich ihrer unteren Enden, d.h. im wesentlichen im Bereich der Achse des hinteren Rades 5, in Richtung des Pfeiles f2 schwenkbar miteinander verbunden. Das Rohr 4 ist mit seinem vorderen Ende derart an das Lenkerrohr 3 angeschlossen, dass dieses Lenkerrohr 3 einerseits relativ zu dem unteren Rohr 4 verschwenkbar ist und andererseits das untere Rohr 4 in Richtung des Pfeiles f3 (s. Figur 3) von dem Lenkerrohr 3 gelöst werden kann.

Gemäß Figur 1 sind drei Rohre 2, 3 und 4 mit derartigen Schienen 7, 8 und 9 ausgerüstet, die jeweils an der Rohraußenseite angebracht sind.

Gemäß Figur 2 sind nur die Rohre 2 und 3 mit Schienen 7 und 8 versehen. Gemäß Figur 3 sind die Rohre 3 und 4 mit an den Außenseiten angebrachten Schienen 8 und 9 versehen, während das Rohr 2 an seiner Innenseite eine Schiene 10 aufweist.

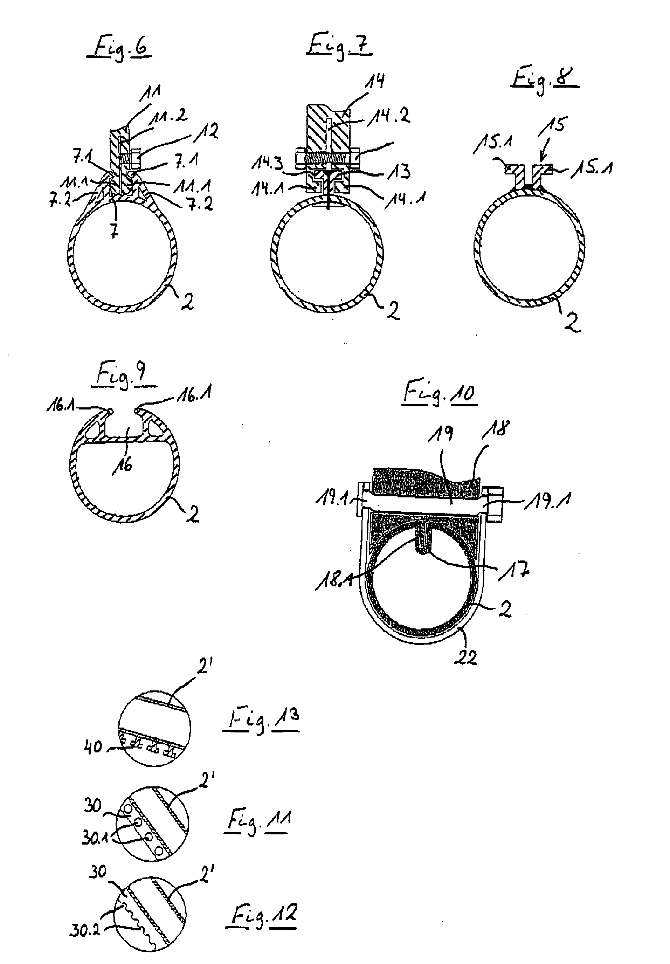

In den Figuren 6, 7 und 8 sind verschiedene Schienenprofile dargestellt, die beispielsweise an dem den Sattel "a" tragenden Rohr 2 angebracht sind.

Gemäß Figur 6 hat die Schiene 7 im Wesentlichen die Form eines an das Rohr angeformte U-Profils mit seitlichen Versteifungsrippen 7.2 und an den U-Ptofilschenkeln nach innen vorspringenden Längsleisten 7.1, die Hinterschneidungen bilden.

In die U-Profilschiene 7 ist eine Halterung 11 für einen nicht dargestellten Sattel eingeschoben. Diese Halterung 11 hat im Bereich ihres in die U-Profilschiene 7 eingeschobenen Abschnitts einen senkrecht zur Rohrachse verlaufenden Einschnitt zur Bildung von zwei Klemmzungen 11.1, die mittels einer Schraube 12 zum Festklemmen der Halterung 11 nach außen gedrückt werden können. Die Halterung 11 ist mit Einkerbungen versehen, in die die Läugsleisten 7.1 eingreifen.

Gemäß Figur 7 ist an dem Rohr 2 eine Schiene in Form eines T-Profils 13 entweder angeschweißt, angeschraubt oder angeformt. Die Halterung 14 ist im Bereich ihres auf die Schiene 13 aufschiebbaren Abschnitts mit einer dem Schienenquerschnitt entsprechenden Aussparung 14.2 und einem senkrecht zur Rohrachse verlaufenden Einschnitt 14.3 zur Bildung von zwei mittels einer Schraube 15 nach innen verspannbaren Klemmzungen 14.1 versehen.

Gemäß Figur 8 sind zur Bildung einer Schiene 15 zwei L-Profile 16 vorgesehen, deren freie Schenkel voneinander weg gerichtet sind, wodurch diese Schiene 15 im Wesentlichen wieder die Form eines T-Profils für eine entsprechend angepasste Halterung 14 hat, wie sie in Figur 7 dargestellt ist.

Bei den Ausführungsformen gemäß den Figuren 9 und 10 liegen die Schienen 16 und 17 innerhalb des Querschnitts des Rohres 2. Gemäß Figur 9 hat die Schiene 16 die Form eines nach außen offenen. U-Profils, das im Bereich des Außenumfangs des Rohres 2 durch Hinterschneidungen bildende Längsleisten 16.1 begrenzet ist. In diese Schiene 16 ist eine Halterung 11 der in Figur 6 dargestellten Art einschiebbar. Dadurch, dass die Schiene in das Innere des Rohres verlegt ist, verringert sich der Raumbedarf im Vergleich zu einer an der Rohraußenseite angebrachten Schiene.

Gemäß Figur 10 hat die Schiene 17 die Form einer in das Rohr 2 eingedrückten Längssicke 17, in die eine an der Halterung 18 angeordnete Leiste 18.1 mittels eines auf die Halterung 18 einwirkenden Exzentermechanismus eindrückbar ist. Gemäß Figur 10 ist ein das Rohr 2 nach Art einer Rohrschelle umgreifendes Band 19 vorgesehen, dessen Enden. Öffnungen zum Einstecken der Enden 19.1 einer Exzenterwelle 19 aufweisen, deren Exzenterabschnitt durch die Halterung 18 hindurchgeführt ist.

Bei der Ausführungsform gemäß Figur 3 ist die Schiene 10 an der zum Inneren des Rahmens gerichteten Seite des Rohres 2' angeordnet. Gemäß Figur 4 hat die Schiene 10 die Form eines U-Profils, dessen Schenkel einen Abstand voneinander haben, der kleiner ist als der Durchmesser des Rohres 2'. Figur 4a zeigt den auf das Rohr 2' und auf die Schiene 10 aufgeschobenen Abschnitt einer Halterung 20, die zwei Klemmzungen 20.1 aufweist, die in einem Abstand voneinander liegen, die im Wesentlichen der Breite der Schiene 10 entspricht. Um diese Halterung 20 auf das Rohr 2' aufschieben zu können, ist das Rohr 2' etwa im Bereich der Pfeile V-V zu einem flachen Abschnitt 2.1' zusammengedrückt, so dass man die Halterung 20 in Richtung des Pfeiles f4 über diesen flach gedrückten Abschnitt 2.1' auf die Schiene 10 aufschieben kann. Danach lässt sich die Halterung 20 in Richtung des Pfeiles f5 wieder auf das kreisförmige Rohr 2.1' nach unten aufschieben und mittels einer Schraube durch Zusammendrücken der Klemmzungen 2.1 auf dem Rohr festklemmen.

Zur zusätzlichen Sicherung einer Halterung gegen Verschieben in Längsrichtung beispielsweise des Rohres 2' kann die in Figur 4 dargestellte Schiene 10 durch eine flache Leiste 30 ersetzt sein, die in Längsrichtung mit im Abstand voneinander angeordneten Retentionen, vorzugsweise in Form von Öffnungen 30.1 oder Einkerbungen 30.2, versehen sein.

Gemäß Figur 11 ist die Schiene durch im Abstand voneinander liegende T-Stücke 40 gebildet, deren freie T-Schenkel in Schienenlängsrichtung ausgerichtet sind.

## Patentansprüche

1. Zusammenlegbares/zusammenklappbares Fahrrad, dessen Rahmen Rohre enthält, die schwenkbar miteinander verbunden und/oder voneinander lösbar und wieder miteinander verbindbar sind, **dadurch gekennzeichnet, dass** mindestens ein Rohr (2; 2'; 3; 4) mit mindestens einer parallel zur Rahmenebene und in Rohrlängsrichtung verlaufenden Schiene (7; 8; 9; 10; 13; 14; 16; 17; 30; 40) zur Befestigung von Fahrrad-Zubehörteilen versehen ist, von denen jedes Zubehörteil mit einer mit der Schiene (2; 2'; 3; 4) zusammenwirkenden Halterung (11; 14; 18; 20) ausgerüstet ist, und dass jede Schiene zum Ein- oder Aufstecken der Halterung mindestens eine senkrecht zur Schienenlängsrichtung liegende Öffnung hat.

2. Fahrrad nach Anspruch 1, **dadurch gekennzeichnet, dass** die Schiene (16; 17) innerhalb des Querschnitts des Rohres (2') verläuft.

3. Fahrrad nach Anspruch 2, **dadurch gekennzeichnet, dass** die Schiene (16) zum Einstecken und Einschieben der Halterung (11) die Form eines nach außen offenen U-Prvfils hat, das am Außenumfang des Rohres (2') durch Hinterschneidungen bildende Längsleisten (16.1) begrenzt ist.

4. Fahrrad nach Anspruch 1, **dadurch gekennzeichnet, dass** die Schiene (7; 13; 15) außerhalb des Querschnitts des Rohres (2; 3; 4) angeordnet ist.

5. Fahrrad nach Anspruch 4, **dadurch gekennzeichnet, dass** die Schiene (7) zum Einstecken und Einschieben der Halterung (11) die Form eines nach außen offenen U-Profils hat, das an der Außenseite durch Hinterschneidungen bildende Längsleisten (7.1) begrenzt i st.

6. Fahrrad nach Anspruch 3 oder 5, **dadurch gekennzeichnet, dass** die Halterung (11) im Bereich ihres in die U-Profilschiene (7) einschiebbaren Abschnitts einen senkrecht zur Rohrachse verlaufenden Einschnitt (11.2) zur Bildung von zwei Klemmzungen (11.1) hat.

7. Fahrrad nach Anspruch 1, **dadurch gekennzeichnet, dass** die Schiene (13) zum Aufstecken der Halterung (14) die Form eines T-Ptofils hat.

8. Fahrrad nach Anspruch 1, **dadurch gekennzeichnet, dass** die Schiene (15) zum Aufstecken der Halterung (14) durch zwei L-Profile (15.1) gebildet ist, deren freie Schenkel voneinander weg gerichtet sind.

9. Fahrrad nach Anspruch 7 oder 8, **dadurch gekennzeichnet, dass** die Halterung (14) im Bereich ihres auf die Schiene (13; 15) aufschiebbaren Abschnitts eine dem Schienenquerschnitt entsprechenden Aussparung (14.3) und einen senkrecht zur Rohrachse verlaufenden Einschnitt (14.2) zur Bildung von zwei nach innen verspannbaren Klemmzungen (14.1) aufweist.

10. Fahrrad nach Anspruch 2, **dadurch gekennzeichnet, dass** Schiene (17) die Form einer in das Rohr eingedrückten Längssicke hat, in die eine an der Halterung (18) angeordnete Leiste (18.1) mittels eines auf die Halterung (18) einwirkenden Exzentermechanismus eindrückbar ist.

11. Fahrrad nach Anspruch 10, **gekennzeichnet durch** ein das Rohr (2) nach Art einer Rohrschelle umgreifendes Band (22), dessen Enden Öffnungen zum Einstecken der Enden (19.1) einer Exzenterwelle (19) aufweisen, deren Exzenterabschnitt **durch** die Halterung (18) hindurch geführt ist.

12. Fahrrad nach Anspruch 1, **dadurch gekennzeichnet, dass** die Schiene (10) an der zum Inneren des Rahmens gerichteten Seite des Rohres (2') an der Außenseite des Rohres angebracht ist, dass das Rohr (2') zum Aufstecken der Halterung (20) einen vorzugsweise auf die Breite der Schiene zusammengedrückten Abschnitt (2.1') enthält, und dass die Halterung (20) zwei Klemmzungen (20.1) aufweist, die in einem Abstand voneinander liegen, der der Breite des zusammengedrückten Rohrabschnitts (2,1') entspricht.

13. Fahrrad nach Anspruch 12, **dadurch gekennzeichnet, dass** die Schiene (10) die Form eines U-Profils hat, dessen Schenkel einen Abstand voneinander haben, der kleiner ist als der Durchmesser des Rohres (2') und im Wesentlichen dem Abstand zwischen den Klemmzungen (20.1) entspricht.

14. Fahrrad nach Anspruch 12, **dadurch gekennzeichnet, dass** die Schiene (30) als im Wesentlichen flache Leiste ausgebildet ist, die in Längsrichtung mit im Abstand voneinander angeordneten Retentionen in Form von Öffnungen (30.1) oder Einkerbungen (30.2) verschen ist.

15. Fahrrad nach Anspruch 12, **dadurch gekennzeichnet, dass** die Schiene durch im Abstand voneinander liegende T-Stücke (40) gebildet ist, deren freie T-Schenkel in Schienenlängsnchtung ausgerichtet sind.
